(19) Europäisches Patentamt
European Patent Office
Office européen des brevets

(11) EP 1 344 048 B1

(12) EUROPÄISCHE PATENTSCHRIFT

(45) Veröffentlichungstag und Bekanntmachung des Hinweises auf die Patenterteilung:
**12.10.2005 Patentblatt 2005/41**

(21) Anmeldenummer: **01994590.6**

(22) Anmeldetag: **26.11.2001**

(51) Int Cl.$^{7}$: **G01N 27/403**

(86) Internationale Anmeldenummer:
**PCT/DE2001/004438**

(87) Internationale Veröffentlichungsnummer:
**WO 2002/042759 (30.05.2002 Gazette 2002/22)**

(54) **ELEKTROCHEMISCHES ANALYSEVERFAHREN, ZUGEHÖRIGE ANORDNUNGEN UND DEREN VERWENDUNG**

METHOD FOR ELECTROCHEMICAL ANALYSIS, CORRESPONDING CONFIGURATIONS AND THE USE THEREOF

PROCEDE D'ANALYSE ELECTROCHIMIQUE, AGENCEMENTS CORRESPONDANTS ET LEUR UTILISATION

(84) Benannte Vertragsstaaten:
**AT BE CH CY DE DK ES FI FR GB GR IE IT LI LU MC NL PT SE TR**

(30) Priorität: **24.11.2000 DE 10058397**

(43) Veröffentlichungstag der Anmeldung:
**17.09.2003 Patentblatt 2003/38**

(73) Patentinhaber: **SIEMENS AKTIENGESELLSCHAFT**
**80333 München (DE)**

(72) Erfinder:
- **MUND, Konrad**
  **91080 Uttenreuth (DE)**
- **GUMBRECHT, Walter**
  **91074 Herzogenaurach (DE)**
- **STANZEL, Manfred**
  **91056 Erlangen (DE)**

(56) Entgegenhaltungen:
**WO-A-90/12314** **DE-A- 19 916 921**

- **NIWA O ET AL: "Small-volume voltammetric detection of 4-aminophenol with interdigitated array electrodes and its application to electrochemical enzyme immunoassay" ANALYTICAL CHEMISTRY, AMERICAN CHEMICAL SOCIETY. COLUMBUS, US, Bd. 65, Nr. 11, 1993, Seiten 1559-1563, XP002082750 ISSN: 0003-2700**
- **NIWA O ET AL: "ELECTROCHEMICAL BEHAVIOR OF REVERSIBLE REDOX SPECIES AT INTERDIGITATED ARRAY ELECTRODES WITH DIFFERENT GEOMETRIES: CONSIDERATION OF REDOX CYCLING AND COLLECTION EFFICIENCY" ANALYTICAL CHEMISTRY, AMERICAN CHEMICAL SOCIETY. COLUMBUS, US, Bd. 62, Nr. 5, 1990, Seiten 447-452, XP000943524 ISSN: 0003-2700 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein elektrochemisches Analyseverfahren mit Redox-(Re)cycling und zugehörige Anordnungen mit einem Elektrodensystem aus wenigstens drei Elektroden, wobei wenigstens eine Arbeitselektrode, eine Gegenelektrode und eine Referenzelektrode vorhanden sind. Daneben bezieht sich die Erfindung auch auf spezifische Verwendungen der Anordnungen mit dem Elektrodensystem.

Bei einer speziellen Form der amperometrischen Analyse wird an einer Arbeitselektrode $W_{ox}$ die reduzierte Form eines zu detektierenden Stoffes $A_{red}$ zu dessen oxidierter Form $A_{ox}$ oxidiert und an einer benachbarten Arbeitselektrode $W_{red}$ wieder zu $A_{red}$ reduziert. Dieser Vorgang, der als sog. Redox-(Re)cyclings bezeichnet wird (Literatur: K. Aoki et al., J. Electroanal. Chem., 256 (1988), Seiten 269 bis 282, O. Niwa et al., Anal. Chem., 65 (1993), Seiten 1559 bis 1563), führt zu einer Signalverstärkung. Für ein solches Verfahren ist insbesondere eine Sensoranordnung mit elektrisch ansteuerbarem Array entsprechend der WO 00/62048 A geeignet. Neben den Arbeitselektroden sind dabei weitere Hilfselektroden vorhanden, die aber kein Redox-Potential erfassen können.

Aufgabe der Erfindung ist es daher, ein Verfahren anzugeben und zugehörige Vorrichtungen der eingangs genannten Art zu schaffen, bei denen die Messungen bei elektrochemischen Analyseverfahren verbessert und vereinfacht werden, bzw. bei denen die Messanordnungen kostengünstiger herstellbar sind.

Die Aufgabe ist bezüglich des Verfahrens erfindungsgemäß durch die Maßnahmen des Patentanspruches 1 und bezüglich der Vorrichtung durch die Merkmale des Patentanspruches 5 gelöst. Weiterbildungen der Erfindung sind in den abhängigen Verfahrens- und/oder Sachansprüchen angegeben. Weiterhin enthalten die Patentansprüche auch bevorzugte Anwendungen der angegebenen Anordnungen mit erfindungsgemäßem Elektrodensystem.

Beim erfindungsgemäßen Verfahren wird ein an sich bekanntes Redox-(Re)cycling zur Verstärkung von Auswertesignalen für ein elektrochemisches Analyseverfahren durchgeführt, bei dem nunmehr erstmalig ein genau definiertes Redox-Potential zur Auswertung genutzt wird. Mit der Erfindung wird also insbesondere eine Referenzelektrode definiert, an der stromlos, d.h. hochohmig das Redox-Potential abgegriffen und der weiteren Signalverarbeitung zugeführt wird.

Referenzelektroden werden zwar bereits häufig bei elektroanalytischen Verfahren (siehe z.B. W. Buchberger "Elektrochemische Analyseverfahren" Spektrum Akademischer Verlag Heidelberg (1998), Berlin) benutzt, die ein vom Analyten unabhängiges stabiles Bezugspotential liefern müssen. Eine klassische Referenzelektrode ist z.B. die Ag/AgCl-Elektrode, die aus folgender Anordnung besteht:

> el. Leiter / Silber / Silberchlorid / KCl-Lösung/Diaphragma Solche Referenzelektroden sind relativ komplex aufgebaut und benötigen Volumina von einigen $cm^3$.

Viele elektroanalytische Verfahren werden heutzutage mit Hilfe der Technologien der Mikroelektronik und Mikrosystemtechnik miniaturisiert (Volumina wenige $mm^3$), wobei jedoch die Möglichkeiten der Miniaturisierung von Referenzelektroden begrenzt sind. Es kann z.B. eine Ag/AgCl-Schicht in Dünnfilmtechnik ausgeführt werden und anstelle eines KCl-Lösungs-Volumens eine definierte Chlorid-Ionen-Konzentration dem Analyten zugefügt werden. Eine solche Referenzelektrode (sog. Elektrode 2. Art) wird in der DD 301 930 A9 für eine Mikro-Mehrelektrodenanordnung benutzt.

Bei mikroelektroanalytischen Verfahren ist jedoch der Einsatz von Ag/AgCl-Schichten i. allg. unerwünscht. Gründe dafür sind eine unvermeidbare Kontaminationsgefahr, fehlende Prozesskompatibilität und hohe Kosten. Insofern sind die vom Stand der Technik bekannten Referenzelektroden für ein Redox-(Re)cycling ungeeignet, so dass dort bisher darauf verzichtet wird.

Bei Realisierung der Erfindung beinhalten die zugehörigen Anordnungen eine besondere Platzierung der Referenzelektrode im Elektrodensystem und zwar so, dass symmetrische Verhältnisse aller Messelektroden zur Referenzelektrode vorliegen. Dabei ist an sich bekannt und wird vorausgesetzt, dass ein sog. Redox-Paar, d.h. ein Gemisch aus oxidierter und reduzierter Form einer Substanz A, ggf. einer Verbindung, an einer elektrochemisch aktiven (Edel)-Metallelektrode in Lösung ein sog. Redox-Potential ausbildet, das exakt definiert ist. Dieses Redox-Potential lässt sich durch Realisierung der hochohmigen Referenzelektrode stromlos messen und zur Auswertung nutzen.

Unter einer elektrochemisch bzw. katalytisch aktiven Elektrode wird in vorliegendem Zusammenhang verstanden, dass sowohl die oxidierte Form der Substanz auf dem Elektrodenmaterial chemisorbiert wird, um einen Elektronenaustausch zu ermöglichen. Diese Forderung wird insbesondere von Edelmetallen, wie Gold (Au), Platin (Pt) od. dgl., aber ggf. auch von anderen Materialien, beispielsweise Kohlenstoff, erfüllt, sofern sie eine Redox-Reaktion ermöglichen.

Für einen Sensor auf der Basis des Redox-(Re)cycling-Verfahrens braucht man Arbeitselektroden $W_{red}$ und $W_{ox}$, eine Gegenelektrode C und eine Referenzelektrode R. Ggf. genügt eine Arbeitselektrode, wenn die Gegenelektrode auch die Funktion einer Arbeitselektrode einnimmt. Bei den einzelnen erfindungsgemäßen Anordnungen wird die Referenzelektrode hinsichtlich der Potentialmessung besonders vorteilhaft ausgestaltet und platziert. Vorzugsweise sind alle Elektroden aus dem gleichen Material, insbesondere einem Edelmetall, wie z.B. Gold, ausgebildet.

Daraus ergibt sich ein entscheidender Vorteil bei der Herstellung solcher Strukturen auf der Basis der Halbleitertechnologie. Die Verwendung von klassischen Referenzelektrodenmaterialien wie z.B. Silber/Silberchlorid entsprechend der DD 301 930 A ist in der Halbleitertechnologie problematisch. Eine Einführung von Silber/Silberchlorid in einem halbleitertechnologischen Prozess würde ein hohes Kontaminationsrisiko für die Standard-Halbleiterprozesse bedeuten und Kompatibilitätsproblem sowie hohe Herstellungskosten bewirken. Die erfindungsgemäße Ausführung der Referenzelektrode in derselben Technologie wie die der anderen Elektroden, d.h. Arbeits- und Gegenelektroden, vermeidet diese Probleme und verringert die Herstellungskosten.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen jeweils in schematischer Darstellung

- Figur 1 eine Anordnung für das Redox-(Re)cycling, aus der insbesondere die erfindungsgemäße Platzierung der Redox-Referenzelektrode hervorgeht,
- Figur 2 die Draufsicht auf ein Elektrodensystem mit zwei Arbeitselektroden, Gegenelektrode und Referenzelektrode zur Verwendung bei der Anordnung gemäß Figur 1,
- Figur 3 eine Abwandlung von Figur 2 mit nur einer Arbeitselektrode, Gegenelektrode und Referenzelektrode,
- Figur 4 die Draufsicht auf ein Elektrodensystem mit parallel kreisförmig ausgebildeten Elektrodenfingern und
- Figur 5 den Querschnitt durch ein Substrat mit Arbeitselektroden und einer Referenzelektrode an der Oberfläche und einer Verarbeitungsschaltung im Innern eines Halbleiters.

Bei einem elektrochemischen Analyseverfahren wird ein sog. Redox-(Re)cycling angewandt. Das Redox-(Re) cycling ist ein bekannter zyklischer Prozess zur Verstärkung von Signalen, wozu ein Aufbau gemäß Figur 1 dient. Es ist eine Substanz A vorhanden und ersichtlich, dass die oxidierten Spezies $A_{Ox}$ an den Arbeitselektroden $W_{Red}$ reduziert werden und dass die reduzierten Spezies $A_{Red}$ dagegen an den Arbeitselektroden $W_{Ox}$ oxidiert werden. Die Arbeitselektroden $W_{Red}$ und $W_{Ox}$ werden auch als Redox-Elektroden für ein sog. Redox-Paar aus den Spezies $A_{Red}$ und $A_{Ox}$ bezeichnet.

Im Einzelnen zeigt Figur 1 einen Schnitt durch einen Teil einer Elektroden-Anordnung mit jeweils mehreren Arbeitselektroden 2, 2' und 3, 3' sowie einer Referenzelektrode 5, die sich auf einem Substrat 1 befinden. Das Redox-(Re)cycling führt in den Bereichen der einzelnen Arbeitselektroden 2, 2' und 3, 3' zu den angegebenen Reaktionen, so dass sich ein Redox-Potential ausbildet. Die Referenzelektrode 5 ist am hochohmigen Eingang eines in Figur 1 nicht dargestellten Messverstärkers angeschlossen, sodass die Spezies $A_{Ox}$ und $A_{Red}$, die von beiden Seiten an die Referenzelektrode 5 herandiffundieren, ein Redox-Potential ausbilden, das sich gemäß der Nernst'schen Gleichung ergibt zu:

$$E = E_0 + RT/zF * \ln (C(A_{Ox})/C(A_{Red})) \quad (1)$$

Dabei bedeuten

- E: Redox-Potential
- R: Gaskonstante
- T: absol. Temperatur
- z: Anzahl der Redox.-Elektronen
- F: Faraday-Konstante
- C: Konzentration der Spezies ($A_{Ox}$) und($A_{Red}$)

Die Erfassung und Auswertung eines solchen Redox-Potentials mittels geeigneter elektrochemischer Messtechnik zwecks Verwendung als Referenzpotential beim Redox-(Re)cycling erfordert eine hochohmige Referenzelektrode. Mitentscheidend für die Funktion eines solchen Referenzelektroden-Prinzips ist die Tatsache, dass das Redox-Potential nicht von den absoluten Konzentrationen der oxidierten und reduzierten Spezies abhängt, sondern von deren Aktivitäten, d.h. chemischem Konzentrations-Verhältnis $C(A_{Ox})/C(A_{Red})$. Bei einem laufenden, sich im Gleichgewicht befindlichen Redox-(Re)cycling-Prozess ist dieses Konzentrationsverhältnis $C(A_{Ox})/C(A_{Red})$ gleich 1.

Als Beispiel für ein Redox-Paar sei p-Aminophenol / Chinonimin genannt:

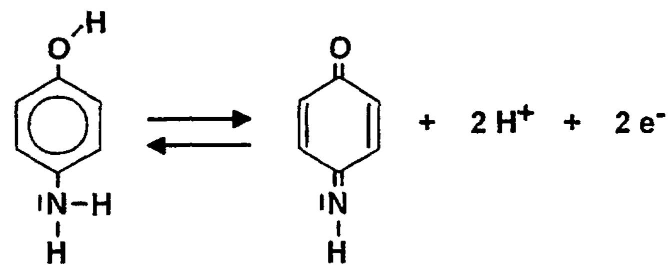


p-Aminophenol Chinonimin

Am entsprechenden Redox-Prozess sind 2 Elektronen sowie 2 $H^+$-Ionen beteiligt.

Dieses System kommt z.B. bei Enzym-gekoppelten Nachweisreaktionen zum Einsatz. Dabei wird das Enzym "Alkalische Phosphatase" als Label- bzw. Verstärkungs-Substanz eingesetzt. Alkalische Phosphatase ist in der Lage, p-Aminophenyl-Phosphat in p-Aminophanol und Phosphat zu spalten:

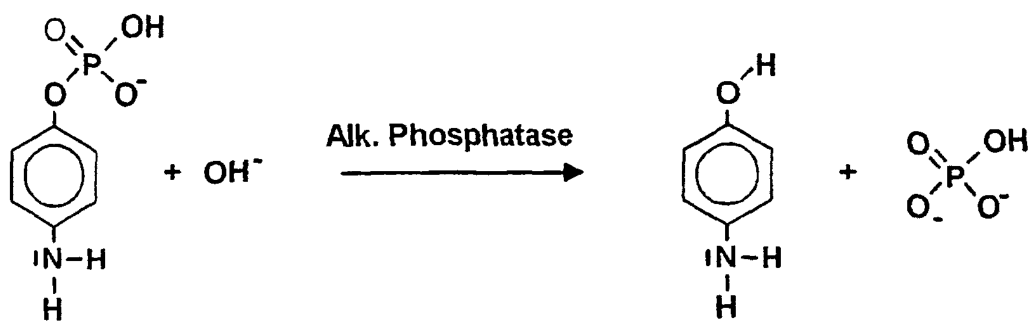


p-Aminophenyl-Phosphat

Das entstehende p-Aminophenol wird am Elektroden-System oxidiert bzw. das Redox-Paar p-Aminophenol/Chinonimin zyklisiert. Zu Beginn einer solchen, auf Redox-(Re)cycling basierenden Nachweisreaktion liegt theoretisch noch kein Chincnimin, sondern nur kleine Mengen von p-Aminophenol vor, so dass das Konzentrationsverhältnis des Redoxpaars p-Aminophenol/chinonimin deutlich von 1 verschieden sein würde und gem. Nernst'scher Gleichung eine Verschiebung des Redoxpotentials zur Folge haben würde.

Vorteilhaft für die Funktion der Referenzelektrode ist nun aber die Tatsache, dass das Enzym-Substrat p-Aminophenyl-phosphat stets teilhydrolysiert vorliegt und somit Spuren (ca. 0,1 %) von p-Aminophenol vorliegen, die ihrerseits teiloxidiert sind somit kleine Konzentrationen des Redox-Paares p-Aminophenol/Chinonimin vorliegen.

Aufgrund der logarithmischen Beziehung in Gleichung (1) ergeben sich selbst bei erheblichen Konzentrationsunterschieden von oxidierter und reduzierter Form nur verhältnismäßig kleine Abweichungen des Redox-Potentials.

Letzteres wird an folgendem Beispiel erläutert: Unter der Annahme, dass das p-Aminophenol/Chinonimin Verhältnis nicht 1, sondern 100/1 wäre, d.h. nur 1 % des p-Aminophenols zu Chinonimin oxidiert wäre, so ergäbe sich aufgrund der Nernst'schen Gleichung ein Unterschied des Redox-Potentials und somit der Referenzelektroden-Spannung von lediglich ca. 60 mV. Somit würde eine Abweichung von 60 mV für die beiden Arbeitselektroden resultieren. Der Vorgang des Redox-Recyclings wird durch diese Abweichung kaum gestört, da die Spannungs-Differenz zwischen den beiden Arbeitselektroden ($W_{Ox}$ und $W_{Red}$) ca. 400 mV beträgt und aufgrund des Betriebs der Elektroden im Diffusionsgrenzstrom Variationen dieser Größenordnung (60 mV) einen zu vernachlässigenden Einfluss haben. Das Redox-(Re)cycling wird zumindest in Gang kommen, wodurch sich das Verhältnis von p-Aminophenol und Chinonimin gleich 1 nähert und somit auch die Abweichungen der Referenzelektrodenspannung gegen Null gehen.

Der Einsatz der erfindungsgemäßen Redox-Referenzelektrode ist nicht auf die besondere Situation des Systems p-Aminophenol / Chinonimin beschränkt. Sie kann für alle enzymgekoppelten Redox-(Re)cycling-Prozesse eingesetzt werden. Zur Stabilisierung des Redox-Referenzelektrodenpotentials kann man dem Enzymsubstrat eine kleine definierte Menge des beteiligten oder auch beliebigen Redoxpaares zusetzen. Eine kleine Menge des Redoxpaares würde über dessen Konzentrationsverhältnis (= 1)das Redoxpotential festlegen, ohne den analytischen Nachweis zu verfälschen, da die analytische Information aus dem enzymgekoppelten, zeitlichen Anstieg der Konzentrationen gewonnen wird und nicht von deren Anfangskonzentration abhängt.

Man kann die erfindungsgemäße Redox-Referenzelektrode auch auf andere, nicht enzymgekoppelte Analyseverfahren anwenden. Ein erstes Beispiel ist die Messung des Sauerstoff-Partialdruckes $pO_2$. Eine bekannte Methode beruht auf der Reduktion von Sauerstoff ($O_2$) und Umsetzung entsprechend Gleichung (2) zu $OH^-$ an einer katalytisch aktiven Edelmetallkathode.

$$1/2\ O_2 + H_2O + 2\ e^- \rightarrow 2\ OH^- \qquad (2)$$

Wird an einer Anode, die als zweite Arbeitselektrode ausgeführt ist, ein oxidierendes Potential aufgeprägt, das ausreicht um das gebildete $OH^-$ wieder zu $O_2$ zu oxidieren, wird ein Redox-(Re)cycling-Prozess in Gang gesetzt. Anstelle einer zweiten Arbeitselektrode kann auch die Gegenelektrode verwendet werden an welcher das nötige Potential durch den Potentiostaten automatisch eingestellt wird. Auch hier kann mit einer Redox-Referenzelektrode das zur Auswertung nötige Referenzpotential abgegriffen werden.

Ein weiteres Beispiel ist eine Glukosemessung. Dazu wird Glukose mit Sauerstoff ($O_2$) in Glukonsäure umgesetzt und über einen zyklisierten Prozess Wasserstoffperoxid ($H_2O_2$) erzeugt, wobei durch Redox-(Re)cycling ebenfalls ein ReferenzPotential zur Auswertung gemessen werden kann.

Figur 2 zeigt eine Ausführungsform für ein Vier-Elektroden-System, bestehend aus den beiden Arbeitselektroden $W_{Ox}$ und $W_{Red}$, die hier speziell als sog. Interdigital-Elektroden 20 und 30 ausgeführt sind, einer Gegenelektrode C, die aus Symmetriegründen mit zwei elektrisch verbundenen Teilelektroden 41, 42 ausgebildet ist, sowie einer Referenzelektrode R.

Unter "Interdigitalelektrode" wird im vorliegenden Zusammenhang eine Elektrode mit fingerartigen Elektrodenteilen bezeichnet, wobei zwei Interdigitalelektroden mit den jeweiligen Fingern kammartig ineinandergreifen können. Dies bedeutet, dass die Arbeitselektrode 20 parallele Finger 21, 22, ..., 25, ... und die Arbeitselektrode 30 parallele Finger 31, 32, ..., 35, ... enthält.

Die Referenzelektrode 50 ist als eine "Fingerelektrode" mit einem einzelnen Finger 55 ausgebildet und derart in der Doppelkammstruktur der Arbeitselektroden 20 und 30 angeordnet, dass der Finger 55 sowohl einem "Finger" 25 als Teil der Arbeitselektrode 20 als auch einem "Finger" 35 als Teilbereichbereich der Arbeitselektrode 30 benachbart ist. Aus dem Detail-Ausschnitt der Figur 2 ergibt sich weiterhin eine konstante Beabstandung des Referenzelektrodenfingers 55 von diesen Teilbereichen der Arbeitselektroden 20 und 30. Damit liegen exakt symmetrische Verhältnisse vor.

Wie vorstehend erläutert, besteht die Anordnung gemäß Figur 2 aus vier Elektroden, d.h. zwei Arbeitselektroden $W_{ox}$ und $W_{Red}$, einer Referenzelektrode R in erfindungsgemäßer Platzierung und einer bzw. zwei Gegenelektroden C, die aber elektrisch miteinander kontaktiert sind und insofern eine einzige Elektrode darstellen. Eine solche Anordnung mit zwei Arbeitselektroden wurde in der Praxis zur Erfassung von Redox-Potentialen erprobt.

In Figur 3 ist die Anordnung gemäß Figur 2 insoweit abgeändert, dass anstelle der zweiten Arbeitselektrode 30 aus Figur 2 die Gegenelektrode verwendet wird. D.h., neben der Arbeitselektrode W, die entsprechend der Arbeitselektrode 20 mit Figuren 21, 22, ..., 25, ... ausgebildet ist, hat die Gegenelektrode 40 eine identische Form mit einzelnen Fingern 41, 42, ..., 45, ..., wobei in diesem Fall die Arbeitselektrode W und die Gegenelektrode C mit ihren Fingern 21, 22, 25, ... bzw. 42, 42, 45, ... kammartig ineinandergreifen. Der Finger 55 der Referenzelektrode 50 ist den beiden Fingern 25 und 45 der Elektroden 20 und 40 exakt gleich beabstandet.

In der Figur 4 ist eine Elektrodenanordnung dargestellt, die von prinzipiellem Aufbau aus der DE 196 10 115 Al vorbekannt ist. Die Elektrodenanordnung gemäß Figur 4 hat ebenfalls zwei Arbeitselektroden $W_{Ox}$ und $W_{Red}$ mit einzelnen Fingern, die hier kreisförmig parallel ausgebildet sind. Dies bedeutet im Einzelnen, dass von zwei parallelen und radialen Elektrodenanschlüssen 120 und 130 einzelne Finger 121, 122, ... und einzelne Finger 131, 132, ... jeweils gegenläufig parallel koaxial verlaufen und insgesamt eine Kreisfläche abdecken. Eine solche Elektrodenanordnung ist flächenmäßig kompakt. Um den kreisförmigen Aufbau ist eine ringförmig ausgebildete Gegenelektrode 140 angeordnet.

Darüber hinaus ist in Figur 4 nunmehr ebenfalls eine Referenzelektrode 50 mit einem einzelnen Finger 55 vorhanden, der parallel zwischen den Anschlüssen 120 und 130 der Arbeitselektroden $W_{Ox}$ und $W_{Red}$ radial zum Gesamtsystem verläuft. Der Finger 55 bei der Referenzelektrode ist also Teilbereichen der Arbeitselektroden $W_{Red}$ und $W_{Ox}$ gleichermaßen benachbart und diesen Teilen gleich beabstandet. Dies bedeutet insbesondere, dass der Finger der Referenzelektrode nicht in das Zentrum der Anordnung hineinragt.

In Figur 5 ist ein Aufbau im Wesentlichen entsprechend Figur 1 dargestellt, die jeweils wieder mehrere Arbeitselektrode $W_{Ox}$ und $W_{Red}$, eine zugehörige Referenzelektrode R sowie eine Gegenelektrode C auf einem Substrat zeigt, das hier mit 10 bezeichnet ist. Als Substrat 10 dient beispielsweise Silizium, das kristallographisch orientiert ist und gleichermaßen Träger von elektrischen Schaltelementen zur messtechnischen Auswertung und/oder Verstärkung

der Redox-Potentiale ist. Dargestellt sind Verstärker 15 bis 17 und Rückkopplungswiderstände 18, wobei insbesondere der hochohmige Operationsverstärker 15 für die Funktionsweise der Referenzelektrode R von Bedeutung ist, um eine stromlose Messung des Redox-Potentials zu ermöglichen. Die Referenzelektrode R liegt am hochohmigen Eingang des Verstärkers 15, wobei deren Ausgang an die Gegenelektrode C angeschlossen ist. Über den anderen Eingang des Verstärkers 15 wird das Soll-Referenzpotential $U_{Ref}$ vorgewählt.

Mit den weiteren Operationsverstärkern 16 bzw. 17 lässt sich bei Anschluss an die Arbeitselektrode $W_{ox}$ und dem zugehörigen Potential $U_{ox}$ der Spannungsabfall $U = R \cdot I_{ox}$ messen und bei Kenntnis des Widerstandswertes R vom Rückkopplungswiderstand 18 die Größe $I_{ox}$ bestimmen. Gleiches gilt für $I_{Red}$ an der Arbeitselektrode $W_{red}$.

Zur Realisierung der Anordnung gem. Figur 3 wird nur eine Arbeitselektroden-Interdigitalelektrode polarisiert und der daraus resultierende elektr. Strom gemessen. Die zweite Interdigitalelektrode wird als Gegenelektrode beschaltet, d.h. die Polarisierung dieser Elektrode wird über den Ausgang des Potentiostaten automatisch eingestellt.

Die Anordnung gemäß Figur 5 lässt sich in einfacher Weise zu einem ein- oder zweidimensionalen Array erweitern. Statt Silizium sind für das Substrat auch andere Materialien, beispielsweise Kunststoff, Glas oder Keramik, möglich. In diesem Fall ist die Auswerteschaltung aus diskreten Bauelementen aufgebaut.

Wesentlich ist in Figur 5, dass die Referenzelektrode unmittelbar in eine Auswerteschaltung eingebunden ist, die entweder analog oder digital aufgebaut sein kann. Durch die unmittelbare Anbindung der Referenzelektrode an den hochohmigen Eingang des Verstärkers ist eine weitgehend störungsfreie Messung des Redox-Potentials mittels vorhandener elektrochemischer Messsignale möglich.

Dies ist von besonderer Bedeutung, weil die sog. Austauschstromdichten des Redoxpaares an der "ultramicro" Referenzelektrode sehr klein sind, d.h. diese Referenzelektrode ist sehr hochohmig und weist eine sehr kleine Kapazität auf. Der Eingang des Verstärkers muss deshalb sehr hochohmig sein, sowie eine sehr kleine Eingangskapazität aufweisen. Diese Forderung wird z.B. besonders gut von einem MOS-Transistor erfüllt, der direkt unterhalb der Elektrode platziert ist.

Insgesamt bildet das Elektrodensystem mit dem zugehörigen Substrat für elektrochemische Analyseverfahren eine komplette Messanordnung, die außer zum im Einzelnen anhand eines konkreten Beispiels beschriebenen Redox-(Re)cycling auch zum Erfassen von enzymgekoppelten Nachweisreaktionen geeignet ist.

## Patentansprüche

**1.** Elektrochemisches Analyseverfahren mittels Redox-(Re)cycling, mit folgenden Verfahrensschritten:

- es werden die reduzierte Form einer Substanz an einer Elektrode oxidiert und die dabei entstandene oxidierte Form der Substanz einer anderen Elektrode zur ursprünglichen Form der Substanz reduziert und bilden zusammen ein sogenanntes Redox-Paar,
- durch einen zyklischen Ablauf von Oxidation und Reduktion wird an beiden Elektroden, den sog. Redox-Elektroden, eine Signalverstärkung für eine nachfolgende Signalauswertung bewirkt,
- ein vom Verhältnis der Konzentrationen bzw. Aktivitäten des Redox-Paares abhängiges, sich an einer katalytisch aktiven Fläche ausbildendes Redox-Potential wird stromlos abgegriffen und als Bezugspotential der Signalauswertung mittels elektrochemischer Messtechnik zugrunde gelegt.

**2.** Elektrochemisches Analyseverfahren nach Anspruch 1, **dadurch gekennzeichnet, dass** das Redox-Potential als Referenzpotential bei der Signalverstärkung durch das Redox-(Re)cycling verwendet wird.

**3.** Elektrochemisches Analyseverfahren nach Anspruch 2, **dadurch gekennzeichnet, dass** das Redox-Potential an einer separaten, mit einem hochohmigen Verstärker verbundenen Referenzelektrode abgegriffen wird.

**4.** Elektrochemisches Analyseverfahren nach Anspruch 3, **dadurch gekennzeichnet, dass** zum Abgreifen eines exakten und stabilen Redox-Potentials die Referenzelektrode äquidistant zu den Redox-Elektroden platziert wird.

**5.** Anordnung zur Durchführung des elektrochemische Analyseverfahrens nach Anspruch 1 oder einem der Ansprüche 2 bis 4, mit einem Elektrodensystem aus wenigstens drei Elektroden, wobei wenigstens eine Arbeitselektrode, eine Gegenelektrode und eine Referenzelektrode vorhanden sind, **dadurch gekennzeichnet, dass** für eine exakte Messung von Redoxpotenzialen das Elektrodensystem symmetrisch ausgebildet ist, wobei die Referenzelektrode (R) zumindest Teilbereichen von zwei der weiteren Elektroden ($M_{ox}$, $W_{red}$, C) benachbart ist, dass die Referenzelektrode (R) über ihre gesamte Ausdehnung von den benachbarten Teilbereichen der weiteren Elektroden ($W_{ox}$, $W_{red}$, C) gleich beabstandet ist, und dass die Referenzelektrode (R) am hochohmigen Eingang eines Messverstärkers (15) angeschlossen ist.

6. Anordnung nach Anspruch 5, **dadurch gekennzeichnet, dass** eine Arbeitselektrode (W), eine Gegenelektrode (C) und eine Referenzelektrode (R) vorhanden sind.

7. Anordnung nach Anspruch 5, **dadurch gekennzeichnet, dass** zwei Arbeitselektroden ($W_{ox}$, $W_{red}$), eine Gegenelektrode (C) und eine Referenzelektrode (R) vorhanden sind.

8. Anordnung nach Anspruch 5 und Anspruch 7, wobei zwei Arbeitselektroden vorhanden sind, **dadurch gekennzeichnet, dass** die Arbeitselektroden ($N_{ox}$, $W_{red}$) gleich und jeweils kammartig mit einzelnen Fingern (21, 22, ..., 25, ....) ausgebildet sind und dass die Arbeitselektroden ($W_{ox}$, $W_{red}$) mit den einzelnen Fingern (31, 32, ..., 35, ...) ineinander greifen, wobei die Referenzelektrode (R) sowohl einem Finger (25) der ersten Arbeitselektrode ($W_{ox}$) als auch einem Finger (35) der zweiten Arbeitselektrode ($W_{red}$) benachbart ist.

9. Anordnung nach Anspruch 5 und Anspruch 6; wobei eine Arbeitselektrode vorhanden ist, **dadurch gekennzeichnet, dass** die Arbeitselektrode (W) und die Gegenelektrode (C) gleich und jeweils kammartig mit einzelnen Fingern ausgebildet sind und dass die Arbeitselektrode (W) und die Gegenelektrode (C) mit den einzelnen Fingern (21, 22, ..., 25, ..., 41, 42, ..., 45, ...) ineinander greifen, wobei die Referenzelektrode (R) sowohl einem Finger (20) der Arbeitselektrode (W) als auch einem Finger (45) der Gegenelektrode (C) benachbart ist.

10. Anordnung nach Anspruch 7 oder Anspruch 8, **dadurch gekennzeichnet, dass** die Arbeitselektroden ($W_{ox}$, $W_{red}$) und die Referenzelektrode (R) parallel verlaufen und eine Rechteckfläche bilden.

11. Anordnung nach Anspruch 7 und Anspruch 10, **dadurch gekennzeichnet, dass** die Arbeitselektrode (W), die Gegenelektrode (C) und die Referenzelektrode (R) parallel verlaufen und eine Rechteckfläche bilden.

12. Anordnung nach Anspruch 8 und Anspruch 9, **dadurch gekennzeichnet, dass** die Arbeitselektroden ($W_{ox}$, $W_{red}$) und die Referenzelektrode (R) parallel kreisförmig verlaufen und eine Kreisfläche bilden.

13. Anordnung nach Anspruch 12, **dadurch gekennzeichnet, dass** die Arbeitselektroden ($W_{ox}$, $W_{red}$) und die Gegenelektrode (C) von radialen Anschlüssen (120, 130) ausgehend parallel kreisförmig verlaufen und die Kreisfläche bilden, wobei die Referenzelektrode (R) radial und parallel zwischen den Anschlüsse (120, 130) der Arbeitselektroden ($W_{ox}$, $W_{red}$) verläuft.

14. Anordnung nach einem der Ansprüche 5 bis 13, **dadurch gekennzeichnet, dass** alle Elektroden ($W_{ox}$, $W_{red}$, C, R) aus dem gleichen Material bestehen.

15. Anordnung nach Anspruch 14, **dadurch gekennzeichnet, dass** die Elektroden ($W_{ox}$, $W_{red}$, C, R) aus Edelmetall gebildet sind.

16. Anordnung nach Anspruch 15, **dadurch gekennzeichnet, dass** das Elektrodensystem auf einer planaren Unterlage (1)eines geeigneten Materials, wie beispielsweise Kunststoff, Glas, Keramik oder insbesondere Silizium, angeordnet ist.

17. Anordnung nach Anspruch 15, **dadurch gekennzeichnet, dass** die Unterlage ein kristallographisch orientiertes Silizium-Substrat (10) ist.

18. Anordnung nach Anspruch 5 und Anspruch 17, **dadurch gekennzeichnet, dass** der Messverstärker (15) durch Integration im Silizium-Substrat (10) gebildet ist und aufgrund des kurzen Anschlussweges eine störungsfreie Potentialmessung ermöglicht.

19. Anordnung nach einem der Ansprüche 5 bis 18, **dadurch gekennzeichnet, dass** das Silizium-Substrat 1, 10) mit den Elektroden ($W_{ox}$, $W_{red}$, C, R) ein Arraysystem bildet.

20. Verwendung einer Anordnung mit wenigstens einem Elektrodensystems nach Anspruch 5 oder einem der Ansprüche 6 bis 19 zum Messen von enzym-gekoppelten Nachweisreaktionen.

21. Verwendung einer Anordnung mit wenigstens einem Elektrodensystem nach Anspruch 5 oder einem der Ansprüche 6 bis 19 zum Messen eines Sauerstoffpartialdruckes ($pO_2$).

22. Verwendung einer Anordnung mit wenigstens einem Elektrodensystem nach Anspruch 5 oder einem der Ansprüche 6 bis 19 zum Messen von Wasserstoffperoxid ($H_2O_2$) für eine Glukosebestimmung.

## Claims

1. Electrochemical analysis method by means of redox-(re)cycling, comprising the following method steps:

- the reduced form of a substance is oxidized at an electrode, and the oxidized form of the substance produced is reduced to the original form of the substrate at another electrode, so that together what is known as a redox pair is formed,
- signal amplification for subsequent signal evaluation is effected by a cyclic sequence of oxidation and reduction at the two electrodes, known as the redox electrodes,
- a redox potential which is dependent on the ratio of the concentrations or activities of the redox pair and forms at a catalytically active surface is tapped without current and, as reference-earth potential, is used as the basis for the signal evaluation by means of electrochemical measurement technology.

2. Electrochemical analysis method according to Claim 1, **characterized in that** the redox potential is used as reference potential in the signal amplification by the redox-(re)cycling.

3. Electrochemical analysis method according to Claim 2, **characterized in that** the redox potential is tapped at a separate reference electrode, which is connected to a high-impedance amplifier.

4. Electrochemical analysis method according to Claim 3, **characterized in that**, to tap an exact and stable redox potential, the reference electrode is positioned equidistantly with respect to the redox electrodes.

5. Arrangement for carrying out the electrochemical analysis method accordg to Claim 1 or one of Claims 2 to 4, having an electrode system comprising at least three electrodes, with at least one working electrode, one counter electrode and one reference electrode being present, **characterized in that**, for exact measurement of Redox potentials, the electrode system is of symmetrical design, the reference electrode (R) is adjacent to at least partial regions of two of the other electrodes ($W_{ox}$, $W_{red}$, C), **in that** the reference electrode (R) is at a uniform distance, over its entire extent, from the adjacent partial regions of the other electrodes ($W_{ox}$, $W_{red}$, C), and **in that** the reference electrode (R) is connected to the high-impedance input of a measurement amplifier (15).

6. Arrangement according to Claim 5, **characterized in that** one working electrode (W), one counter electrode (C) and one reference electrode (R) are present.

7. Arrangement according to Claim 5, **characterized in that** two working electrodes ($W_{ox}$, $W_{red}$), one counter electrode (C) and one reference electrode (R) are present.

8. Arrangement according to Claim 5 and Claim 7, with two working electrodes present, **characterized in that** the working electrodes ($W_{ox}$, $W_{red}$) are of identical design, each being in the form of a comb with individual fingers (21, 22, ..., 25, ...), and **in that** the working electrodes ($W_{ox}$, $W_{red}$) engage in one another by means of the individual fingers (31, 32, ..., 35, ...), the reference electrode (R) being adjacent both to a finger (25) of the first working electrode ($W_{ox}$) and a finger (35) of the second working electrode ($W_{red}$).

9. Arrangement according to Claim 5 and Claim 6, with one working electrode present, **characterized in that** the working electrode (W) and the counter electrode (C) are of identical design and are each in the form of a comb with individual fingers, and **in that** the individual fingers (21, 22, ..., 25, ... 41, 42, ..., 45, ...) of the working electrode (W) and the counter electrode (C) engage in one another, the reference electrode (R) being adjacent to both a finger (20) of the working electrode (W) and a finger (45) of the counter electrode (C).

10. Arrangement according to Claim 7 or Claim 8, **characterized in that** the working electrodes ($W_{ox}$, $W_{red}$) and the reference electrode (R) run parallel and form a rectangular area.

11. Arrangement according to Claim 7 and Claim 10, **characterized in that** the working electrode (W), the counter electrode (C) and the reference electrode (R) run parallel and form a rectangular area.

**12.** Arrangement according to Claim 8 and Claim 9, **characterized in that** the working electrodes ($W_{ox}$, $W_{red}$) and the reference electrode (R) run parallel in the shape of a circle and form a circular area.

**13.** Arrangement according to Claim 12, **characterized in that** the working electrodes ($W_{ox}$, $W_{red}$) and the counter electrode (C), starting from radial connections (120, 130), run parallel in the shape of a circle and form the circular area, the reference electrode (R) running radially and parallel between the connections (120, 130) of the working electrodes ($W_{ox}$, $W_{red}$).

**14.** Arrangement according to one of Claims 5 to 13, **characterized in that** all the electrodes ($W_{ox}$, $W_{red}$, C, R) consist of the same material.

**15.** Arrangement according to Claim 14, **characterized in that** the electrodes ($W_{ox}$, $W_{red}$, C, R) are formed from precious metal.

**16.** Arrangement according to Claim 15, **characterized in that** the electrode system is arranged on a planar substrate (1) made from a suitable material, such as for example plastic, glass, ceramic or in particular silicon.

**17.** Arrangement according to Claim 15, **characterized in that** the substrate is a crystallographically oriented silicon substrate (10).

**18.** Arrangement according to Claim 5 and Claim 17, **characterized in that** the reference electrode, the measurement amplifier (15) is formed by integration in the silicon substrate (10) and allows interference-free potential measurement on account of the short connection distance.

**19.** Arrangement according to one of Claims 5 to 18, **characterized in that** the silicon substrate (10) together with the electrodes ($W_{ox}$, $W_{red}$, C, R) forms an array system.

**20.** Use of the arrangement having at least one electrode system according to Claim 5 or one of Claims 6 to 19 for measuring enzyme-linked detection reaction.

**21.** Use of the arrangement having at least one electrode system according to Claim 5 or one of Claims 6 to 19 for measuring an oxygen partial pressure ($pO_2$).

**22.** Use of the arrangement having at least one electrode system according to Claim 5 or one of Claims 6 to 19 for measuring hydrogen peroxide ($H_2O_2$) for glucose determination.

**Revendications**

**1.** Procédé d'analyse électrochimique au moyen d'un (re)cycling redox comprenant des stades de procédés suivants :

- on oxyde la forme réduite d'une substance sur une électrode et on réduit la forme oxydée de la substance ainsi créée sur une autre électrode en la forme d'origine de la substance et les deux forment ensemble ce que l'on appelle un couple redox ;
- par un déroulement cyclique d'oxydation et de réduction, on provoque sur les deux électrodes, ce que l'on appelle les électrodes redox, une amplification du signal pour une exploitation ultérieure du signal ;
- on prélève sans courant un potentiel redox dépendant du rapport des concentrations ou des activités du couple redox et se formant sur une surface active du point de vue catalytique et on le prend pour base en tant que potentiel de référence de l'exploitation du signal au moyen d'une technique de mesure électrochimique.

**2.** Procédé d'analyse électrochimique suivant la revendication 1, **caractérisé en ce que** l'on utilise le potentiel redox comme potentiel de référence lors de l'amplification du signal par le (re)cycling redox.

**3.** Procédé d'analyse électrochimique suivant la revendication 2, **caractérisé en ce que** l'on prélève le potentiel redox sur une électrode de référence distincte reliée à un amplificateur de grande valeur ohmique.

**4.** Procédé d'analyse électrochimique suivant la revendication 3, **caractérisé en ce que**, pour prélever un potentiel redox exact et stable, on place l'électrode de référence à équidistance des électrodes redox.

**5.** Dispositif pour effectuer le procédé d'analyse électrochimique suivant la revendication 1 ou l'une des revendications 2 à 4, comprenant un système d'électrodes constitué d'au moins trois électrodes avec présence d'au moins une électrode de travail, d'une contre-électrode et d'une électrode de référence, **caractérisé en ce que**, pour une mesure exacte de potentiel redox, le système d'électrodes est constitué de façon symétrique, l'électrode (R) de référence étant voisine au moins de zones partielles de deux des autres électrodes ($W_{Ox}$, $W_{Red}$, C), **en ce que** l'électrode (R) de référence est équidistance sur toute son étendue des zones partielles voisines des autres électrodes ($W_{Ox}$, $W_{Red}$, C) et **en ce que** l'électrode (R) de référence est reliée à une entrée de grande valeur ohmique d'un amplificateur (15) de mesure.

**6.** Dispositif suivant la revendication 5, **caractérisé en ce qu'**il y a une électrode (W) de travail, une contre-électrode (C) et une électrode (R) de référence.

**7.** Dispositif suivant la revendication 5, **caractérisé en ce qu'**il y a deux électrodes ($W_{Ox}$, $W_{Red}$) de travail, une contre électrode (C) et une électrode (R) de référence.

**8.** Dispositif suivant la revendication 5 et la revendication 7, dans lequel il y a deux électrodes de travail, **caractérisé en ce que** les électrodes ($W_{Ox}$, $W_{Red}$) de travail sont identiques et sont constituées, respectivement, à la manière d'un peigne ayant des doigts (21, 22, ..., 25, ...) et **en ce que** les électrodes ($W_{Ox}$, $W_{Red}$) de travail s'interpénètrent par leurs doigts (31, 32, ..., 35, ...), l'électrode (R) de référence étant voisine tant d'un doigt (25) de la première électrode ($W_{Ox}$) de travail qu'également d'un doigt (35) de la deuxième électrode ($W_{Red}$) de référence.

**9.** Dispositif suivant la revendication 5 et la revendication 6, dans lequel il y a une électrode de travail, **caractérisé en ce que** l'électrode (W) de travail et la contre-électrode (C) sont identiques et sont constituées, respectivement, à la manière d'un peigne ayant des doigts et **en ce que** l'électrode (W) de travail et la contre-électrode (C) s'interpénètrent par leur doigt (21, 22, ..., 25, ..., 41, 42, ..., 45, ...), l'électrode (R) de référence étant voisine tant d'un doigt (20) de l'électrode (W) de travail que d'un doigt (45) de la contre-électrode (C).

**10.** Dispositif suivant la revendication 7 ou la revendication 8, **caractérisé en ce que** les électrodes ($W_{Ox}$, $W_{Red}$) de travail et l'électrode (R) de référence s'étendent parallèlement et forment une surface rectangulaire.

**11.** Dispositif suivant la revendication 7 et la revendication 10, **caractérisé en ce que** l'électrode (W) de travail, la contre-électrode (C) et l'électrode (R) de référence s'étendent parallèlement et forment une surface rectangulaire.

**12.** Dispositif suivant la revendication 8 et la revendication 9, **caractérisé en ce** les électrodes ($W_{Ox}$, $W_{Red}$) de travail, l'électrode (R) de référence s'étendent parallèlement en forme de cercle et forment une surface circulaire.

**13.** Dispositif suivant la revendication 12, **caractérisé en ce que** les électrodes ($W_{Ox}$, $W_{Red}$) de travail et la contre-électrode (C) s'étendant parallèlement en forme de cercle en partant de bornes (120, 130) radiales et forment la surface circulaire, l'électrode (R) de référence s'étendant radialement et parallèlement entre les bornes (120, 130) des électrodes ($W_{Ox}$, $W_{Red}$) de travail.

**14.** Dispositif suivant l'une des revendications 5 à 13, **caractérisé en ce que** toutes les électrodes ($W_{Ox}$, $W_{Red}$, C, R) sont dans le même matériau.

**15.** Dispositif suivant la revendication 14, **caractérisé en ce que** les électrodes ($W_{Ox}$, $W_{Red}$, C, R) sont en métal précieux.

**16.** Dispositif suivant la revendication 15, **caractérisé en ce que** le système d'électrodes est disposé sur un support (1) plan en un matériau approprié, comme par exemple de la matière plastique, du verre de la céramique ou notamment du silicium.

**17.** Dispositif suivant la revendication 15, **caractérisé en ce que** le support est un substrat (10) de silicium à orientation cristallographique.

**18.** Dispositif suivant la revendication 5 et la revendication 17, **caractérisé en ce que** l'amplificateur (15) de mesure est formé par intégration dans le substrat (10) en silicium et permet, en raison de la courte voie de connexion, une mesure de potentiel sans parasite.

**19.** Dispositif suivant l'une des revendications 5 à 18, **caractérisé en ce que** le substrat (1, 10) en silicium forme avec les électrodes ($W_{Ox}$, $W_{Red}$, C, R) un système de réseau.

**20.** Utilisation d'un dispositif ayant au moins un système d'électrodes suivant la revendication 5 ou suivant l'une des revendications 6 à 19 pour la mesure de réaction de détection à couplage d'enzymes.

**21.** Utilisation d'un dispositif ayant au moins un système d'électrodes suivant la revendication 5 ou suivant l'une des revendications 6 à 19 pour la mesure d'une pression partielle d'oxygène ($pO_2$).

**22.** Utilisation d'un dispositif ayant au moins un système d'électrodes suivant la revendication 5 ou suivant l'une des revendications 6 à 19 pour la mesure du peroxyde d'hydrogène ($H_2O_2$) pour une détermination du glucose.

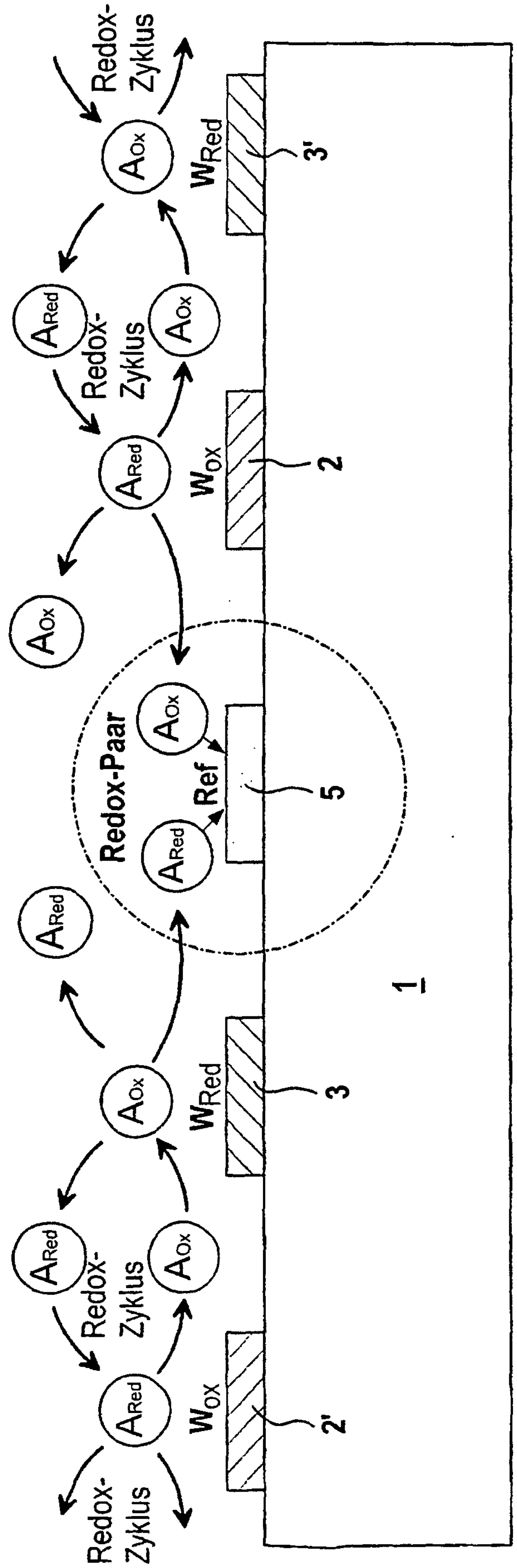


FIG 1

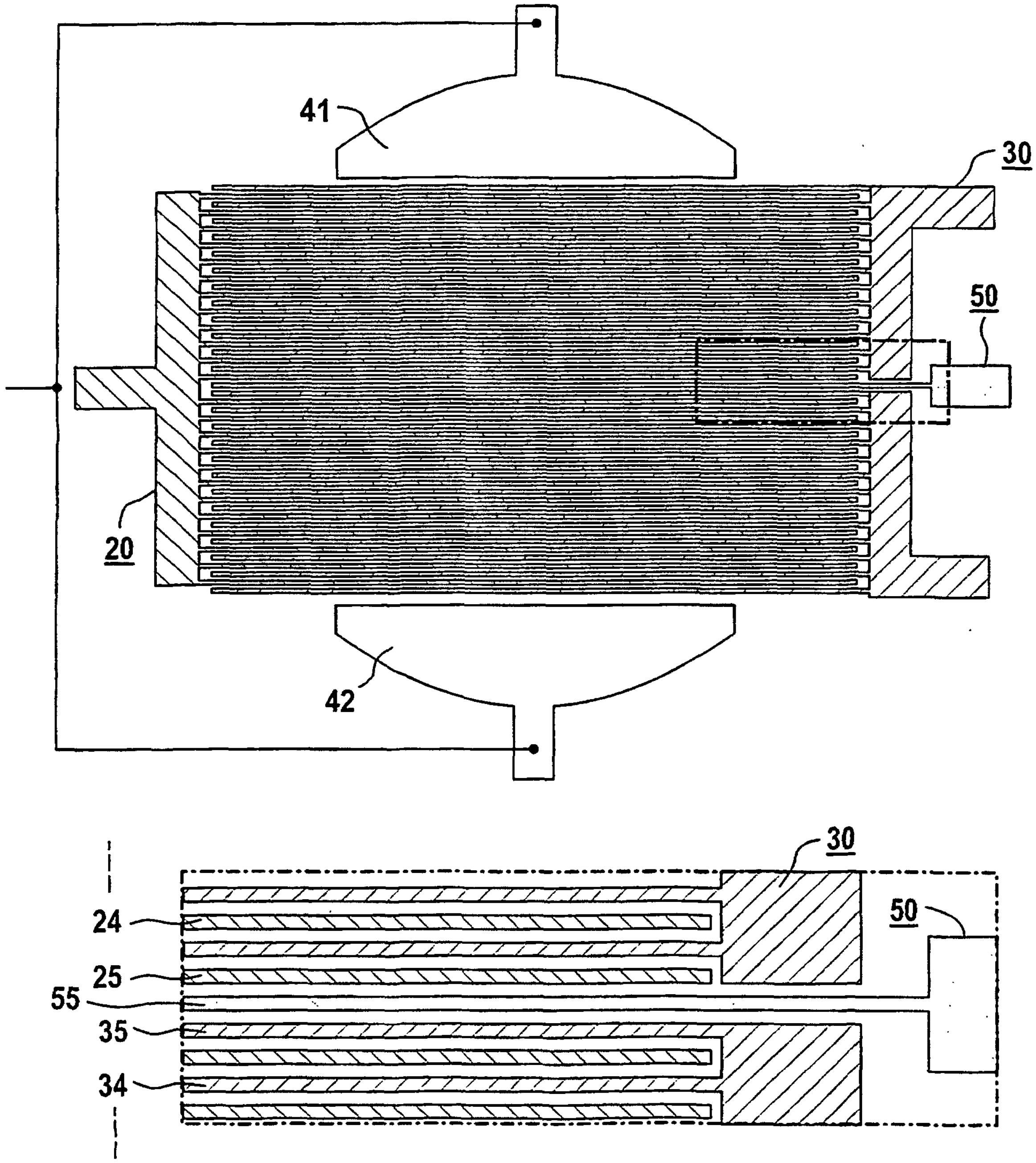


FIG 2

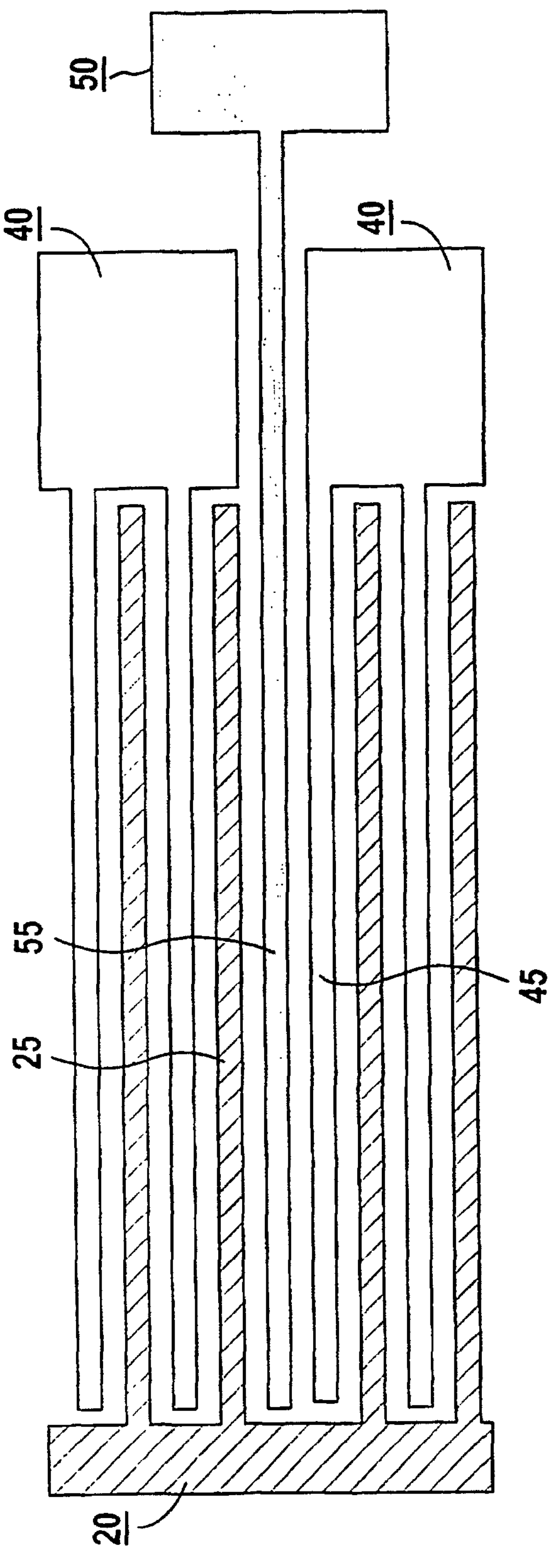


FIG 3

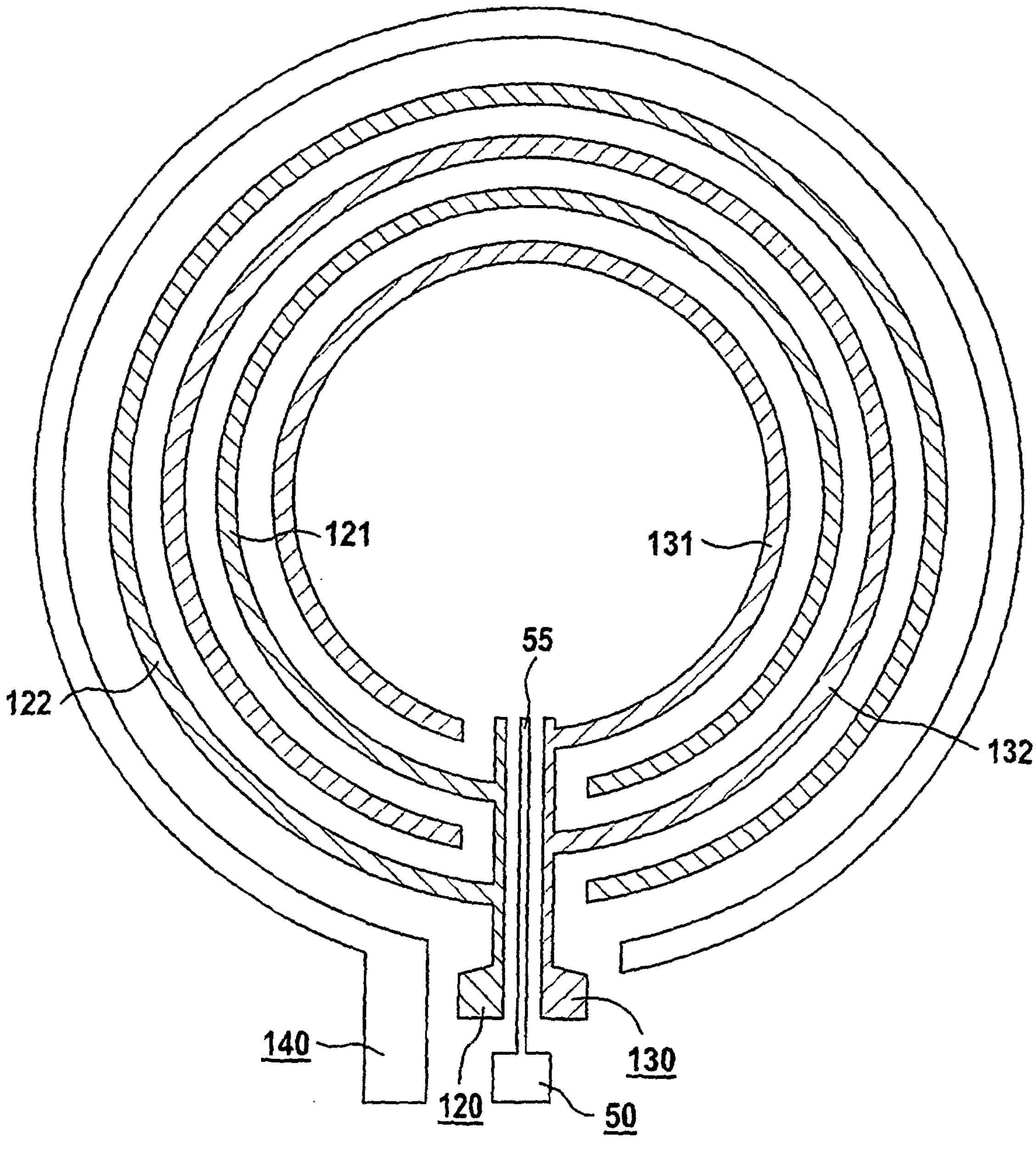


FIG 4

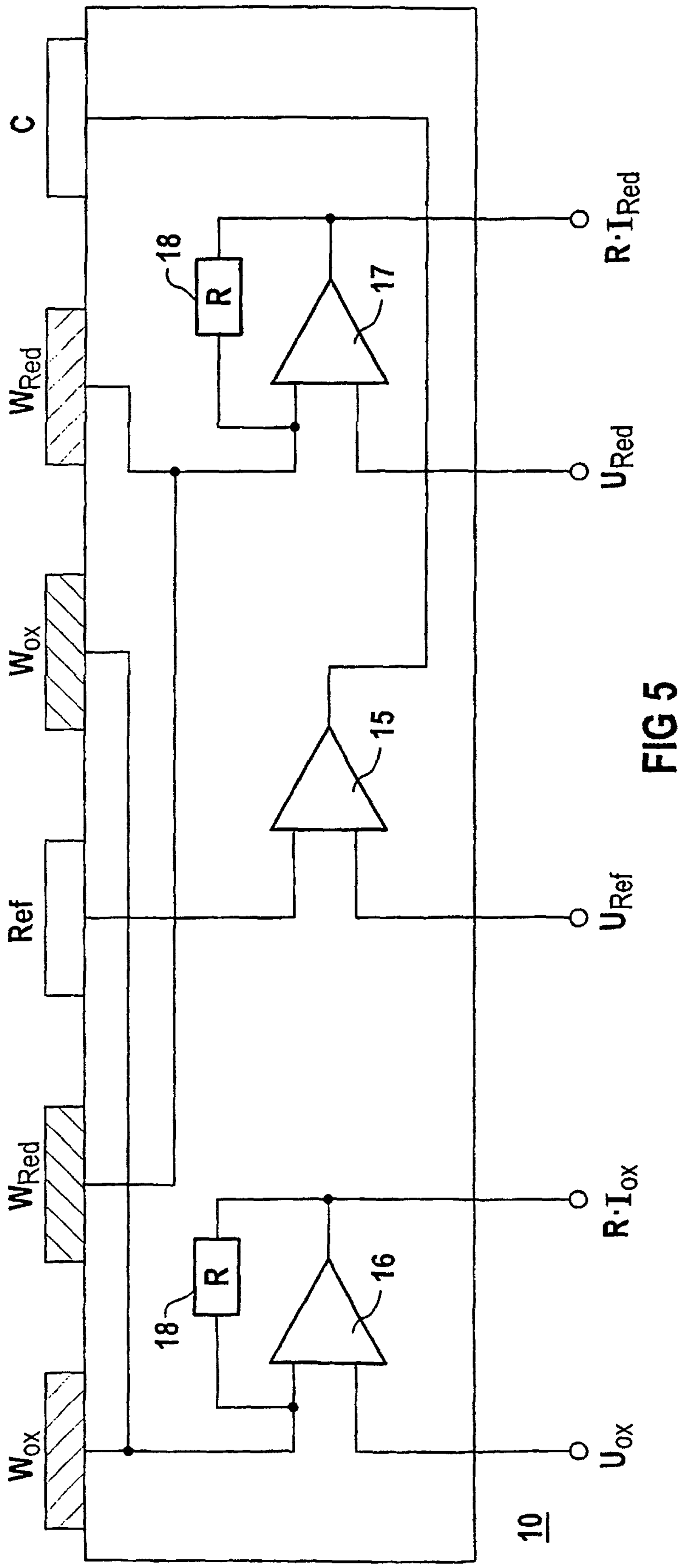
C
$W_{Red}$
$W_{ox}$
Ref
$W_{Red}$
$W_{ox}$
R
18
17
15
R
18
16
$R \cdot I_{Red}$
$U_{Red}$
$U_{Ref}$
$R \cdot I_{ox}$
$U_{ox}$
10

FIG 5